# EUROPÄISCHE PATENTSCHRIFT

(11) **EP 1 634 000 B1**
(45) Veröffentlichungstag und Bekanntmachung des Hinweises auf die Patenterteilung: **04.10.2006**
(21) Anmeldenummer: 03732575.0
(22) Anmeldetag: 14.06.2003
(51) Int. Cl.: F16J 9/22

(54) **HUBKOLBENMASCHINE**
RECIPROCATING PISTON ENGINE
MACHINE A COMBUSTION INTERNE ALTERNATIVE

(43) Veröffentlichungstag der Anmeldung: 15.03.2006
(73) Patentinhaber: MAN B & W Diesel A/S, 2450 Copenhagen SV (DK)
(72) Erfinder: JENSEN, Sören Helmuth, DK-2942 Skodsborg (DK)
(74) Vertreter: Munk, Ludwig
(86) Internationale Anmeldenummer: PCT/EP2003/006298
(87) Internationale Veröffentlichungsnummer: WO 2004/111503

(56) Entgegenhaltungen:
- WO-A-03/008845
- DE-A- 4 331 324
- DE-A- 10 118 910
- DE-A- 19 942 241
- DE-C- 536 936
- DE-C- 955 463
- DE-C- 19 833 825
- DE-C- 19 944 453
- US-A1- 2002 033 579
- PATENT ABSTRACTS OF JAPAN vol. 1998, no. 01, 30. Januar 1998 (1998-01-30) & JP 09 257130 A (NISSAN MOTOR CO LTD), 30. September 1997 (1997-09-30)
- PATENT ABSTRACTS OF JAPAN vol. 1999, no. 08, 30. Juni 1999 (1999-06-30) & JP 11 063703 A (SANYO ELECTRIC CO LTD), 5. März 1999 (1999-03-05)
- PATENT ABSTRACTS OF JAPAN vol. 1999, no. 12, 29. Oktober 1999 (1999-10-29) & JP 11 201283 A (MITSUBISHI HEAVY IND LTD), 27. Juli 1999 (1999-07-27)

## Beschreibung

Die Erfindung betrifft eine Hubkolbenmaschine, insbesondere eine Hubkolbenbrennkraftmaschine, vorzugsweise in Form eines Zweitakt-Großdieselmotors, mit wenigstens einem in einem Zylinder aufgenommenen Kolben, der mit wenigstens einem in einer zugeordneten Kolbenringnut angeordneten Kolbenring versehen ist, der mit einer auf Pressung belasteten Kontaktfläche an seiner Unterseite auf der unteren Seitenflanke der zugeordneten Kolbenringnut aufliegt.

Die den Kolbenring aufnehmende, untere Seitenflanke der Kolbenringnut unterliegt zwangsläufig einem Verschleiß. Die Lebensdauer und damit die Länge der erforderlichen Instandhaltungsintervalle hängt von der Verschleißrate ab. Je höher diese ist, desto kürzer sind die genannten Intervalle. Kurze Instandhaltungsihtervalle wirken sich ungünstig auf die Wirtschaftlichkeit aus.

Die US 2002/0033579 A1 zeigt einen Kolbenring, der an seiner Unterseite in der Nähe seines radial äußeren Rands mit einer umlaufenden Nut versehen ist, die vom Spalt zwischen Kolben und Zylinderbüchse her zugänglich ist und zur Aufnahme und Speicherung von abgestreiftem Schmiermittel dient. Eine Absenkung der Verschleißrate der tragenden Seitenflanke der zugeordneten Kolbenringnut ist hiermit nicht beabsichtigt.

Hiervon ausgehend ist es daher die Aufgabe der vorliegenden Erfindung, eine Hubkolbenmaschine eingangs erwähnter Art mit einfachen und kostengünstigen Mitteln so zu verbessern, dass eine hohe Lebensdauer jeder einen zugeordneten Kolbenring aufnehmenden unteren Seitenflanke einer Kolbenringnut erreicht wird.

Diese Aufgabe wird erfindungsgemäß dadurch gelöst, dass die auf Pressung belastete, die untere Seitenflanke der Kolbenringnut berührende Kontaktfläche an der Unterseite des Kolbenrings kleiner als die durch den radial inneren Rand des Kolbenrings und den radial äußeren Rand der Kolbenringnut begrenzte Überdeckungsfläche ist, wobei die Unterseite des Kolbenrings mit ihre wirksame Kontaktfläche begrenzenden, oberflächenseitigen Ausnehmungen versehen ist, zwischen denen Stege vorgesehen sind.

Nur dort, wo die Unterseite des Kolbenrings die untere Seitenflanke der zugeordneten Kolbenringnut berührt, also im Bereich der Kontaktfläche können Abrieb und dementsprechend Verschleiß entstehen. Da die Kontaktfläche an der Unterseite des Kolbenrings kleiner als die Überdeckungsfläche ist, und der Kolbenring sich im Betrieb bewegt, verteilt sich der an der vom Kolbenring kontaktierten Fläche der unteren Seitenflanke der Kolbenringnut entstehende Verschleiß auf die gesamte Überdeckungsfläche. Die Folge davon ist eine über die ganze Überdeckungsfläche gesehene, vergleichsweise geringe Verschleißrate und dementsprechend eine entsprechend hohe Lebensdauer. Mit den erfindungsgemäßen Maßnahmen werden daher lange Instandhaltungsintervalle und dementsprechend eine ausgezeichnete Wirtschaftlichkeit erreicht.

Vorteilhafte Ausgestaltungen und zweckmäßige Fortbildungen der übergeordneten Maßnahmen sind in den Unteransprüchen angegeben.

Zweckmäßig kann das Verhältnis der Größe der wirksamen Kontaktfläche des Kolbenrings zur Gesamtfläche der Unterseite des Kolbenrings im Bereich von 1:1,5 bis 1:3 liegen. Ein bevorzugtes Verhältnis ist 1:2. Dies ergibt einen günstigen Kompromiss zwischen der auftretenden Flächenpressung einerseits und der Verteilung des Verschleißes auf eine größere Fläche andererseits.

In weiterer Fortbildung der übergeordneten Maßnahmen kann die den zugeordneten Kolbenring aufnehmende, untere Seitenflanke der Kolbenringnut eine ununterbrochene Oberfläche aufweisen. Dies erleichtert die Herstellung.

Vorteilhaft kann die Oberfläche der unteren Seitenflanke der Kolbenringnut aus einem verschleißfesten Material bestehen. Dies erhöht die Lebensdauer.

Eine weitere vorteilhafte Maßnahme kann darin bestehen, dass die die wirksame Kontaktfläche begrenzenden Ausnehmungen vom radial inneren Rand des Kolbenrings ausgehen. Hierdurch ist sichergestellt, dass die auf die Innenseite des Kolbenrings gelangenden Abgase in die genannten Ausnehmungen eindringen können, wodurch eine Entlastung des Kolbenrings und damit eine Reduzierung der Flächenpressung im Bereich der wirksamen Kontaktfläche erreicht werden können, was sich vorteilhaft auf die Reduzierung von Verschleiß auswirkt.

Vorteilhaft können die die wirksame Kontaktfläche begrenzenden Ausnehmungen an einem dem radial äußeren Randbereich des Kolbenrings zugeordneten Anlagebereich enden. Der auf diese Weise durchgehend gestaltete Anlagebereich ermöglicht in vorteilhafter Wiese eine gasdichte Anlage.

Zweckmäßig kann der Anlagebereich mit wenigstens einer einen Leckagekanal bildenden Unterbrechung versehen sein, die mit einer vom radial inneren Rand des Kolbenrings ausgehenden Ausnehmung kommuniziert. Diese Maßnahme ermöglicht eine kontrollierte Leckage, die insbesondere bei den oberen Kolbenringen erwünscht ist, um eine zuverlässige Beaufschlagung des jeweils darunter sich befindenden Kolbenrings mit Gasdruck zu gewährleisten.

Gemäß einer weiteren zu bevorzugenden Ausgestaltung der übergeordneten Maßnahmen können die die wirksame Kontaktfläche begrenzenden Ausnehmungen als vom radial inneren Rand des Kolbenrings ausgehende, bis zum Anlagebereich reichende Nuten ausgebildet sein, die zweckmäßig einen gegenüber der radialen Richtung geneigten Verlauf aufweisen. Diese Maßnahmen unterstützen eine Rotation des Kolbenrings und damit eine gute Verteilung des Verschleißes auf die gesamte Überdeckungsfläche.

Vorteilhaft ist die Breite von die die wirksame Kontaktfläche begrenzenden Ausnehmungen voneinander trennenden Stegen kleiner als die quer hierzu gerichtete Kolbenringbewegung. Auch hierdurch wird eine gleichmäßige Verteilung des Verschleißes auf die gesamte Überdeckungsfläche begünstigt.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Teilansicht eines Vertikalschnitts durch einen Zylinder eines Zweitakt-Großdieselmotors,
- Figur 2: eine vergrößerte Darstellung eines einen Kolbenring enthaltenden Ausschnitts aus Figur 1,
- Figur 3: eine Draufsicht auf die Unterseite des Kolbenrings von Figur 2,
- Figur 4: einen Radialschnitt durch den Kolbenring von Figur 2 mit angedeuteter Gasströmung,
- Figur 5: einen Draufsicht auf eine andere Kolbenring-Ausführung und
- Figur 6: einen Radialschnitt durch den Kolbenring gemäß Figur 5.

Hauptanwendungsgebiet der Erfindung sind große Hubkolbenbrennkraftmaschinen, insbesondere Zweitakt-Großdieselmotoren, wie sie beispielsweise für Schiffsantriebe Verwendung finden. Der Aufbau und die Wirkungsweise derartiger Motoren sind an sich bekannt und bedürfen daher im vorliegenden Zusammenhang keiner näheren Erläuterung mehr.

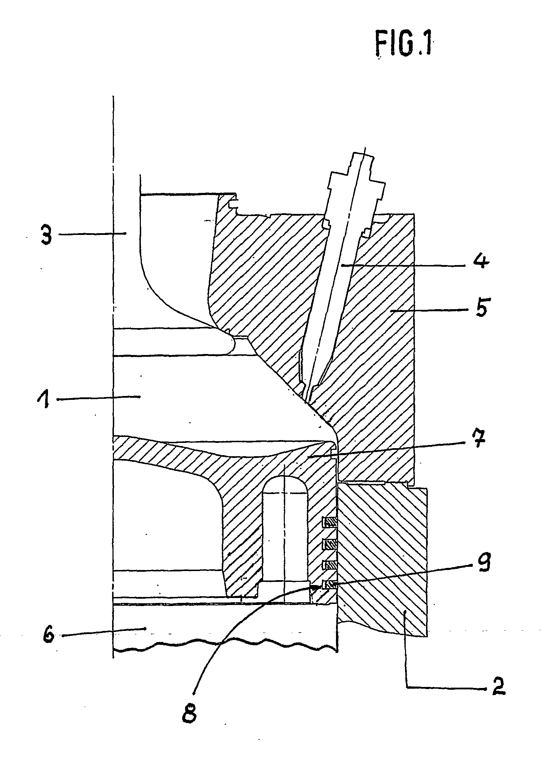

Der in Figur 1 dargestellte, einen Brennraum 1 enthaltende Zylinder eines Zweitakt-Großdieselmotors besteht aus einer Zylinderbuchse 2 und einem auf dieser aufgenommenen, mit einem durch ein Ventil 3 kontrollierbaren Auslass und mit einem Einspritzventil 4 versehenen Zylinderkopf 5. Die untere, bewegliche Begrenzung des Brennraums 1 wird durch einen in der Zylinderbuchse 2 geführten Kolben 6 gebildet, der ein an einer nicht dargestellten Kolbenstange befestigtes Unterteil und eine hierauf aufgenommene Kolbenkrone 7 aufweist. Diese ist mit einem Kolbenringpaket versehen, das hier vier in umfangsseitige Kolbenringnuten 8 eingreifende Kolbenringe 9 umfasst, bei denen es sich um sogenannte gasdichte oder geschlitzte Kolbenringe handeln kann.

In der Regel ist zumindest der oberste Kolbenring eines Kolbenringpakets zur Vermeidung von Leistungsverlusten als schlitzloser Kolbenring ausgebildet, der eine über seinen ganzen Umfang spaltfrei durchgehende, mit der Lauffläche der Zylinderbuchse 2 zusammenwirkende Umfangsfläche aufweist. Die darunter liegenden Kolbenringe können als geschlitzte Kolbenringe ausgebildet sein, deren unter einem Winkel abgeschrägte Enden einander unter Bildung eines Schlitzes bzw. Spaltes gegenüberstehen. Die vorliegende Erfindung ist in beiden Fällen mit Vorteil anwendbar.

Die Kolbenringe 9 liegen mit ihrer Unterseite auf der unteren Seitenflanke der jeweils zugeordneten Kolbenringnut 8 auf. Im Betrieb werden die Kolbenringe 9 durch den im Brennraum 8 entstehenden Gasdruck beaufschlagt. Diese Belastung wird auf die untere Seitenflanke der zugeordneten Kolbenringnut übertragen und führt dort zwangsläufig zu Verschleiß. Sobald der Verschleiß einen gewissen Wert erreicht hat, muss die die Kolbenringnuten 8 enthaltende Kolbenkrone 7 ausgetauscht werden, was einen hohen Aufwand erfordert.

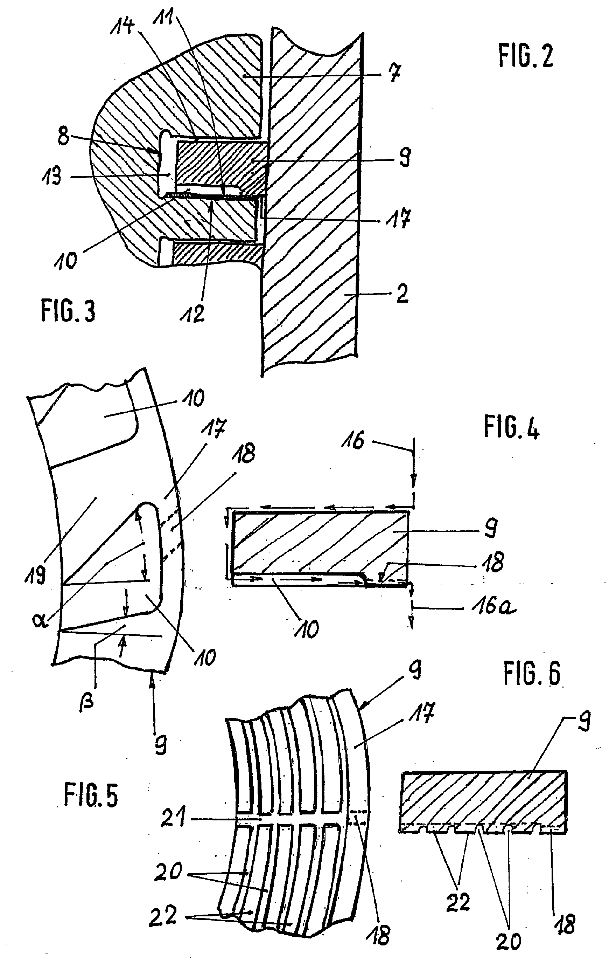

Um die Lebensdauer der Kolbenkrone 7 und dementsprechend die Instandhaltungsintervalle zu verlängern, sind die Kolbenringe 9, wie beispielsweise aus Figur 2 hervorgeht, an ihrer Unterseite mit oberflächigen Ausnehmungen 10 versehen, welche die auf Pressung beanspruchte, die untere Seitenflanke der zugeordneten Kolbenringnut 8 tatsächlich berührende Kontaktfläche des Kolbenrings 9 gegenüber der maximal möglichen Berührungsfläche reduzieren. Die Kontaktfläche ist dementsprechend kleiner als die gegenseitige Überdeckungsfläche von Kolbenringunterseite und unterer Seitenflanke der zugeordneten Kolbenringnut 8, das heißt sie ist gegenüber der Fläche zwischen der radial inneren Begrenzung des Kolbenrings 9 und der radial äußeren Begrenzung der Kolbenringnut 8 reduziert. Diese Reduktion ist so gewählt dass das Verhältnis der wirksamen Kontaktfläche der Unterseite des Kolbenrings 9 zu seiner unteren Gesamtfläche im Bereich von 1:1,5 bis 1:3 liegt. Bei einer bevorzugten Ausführung entspricht diese Reduktion etwa der Hälfte der Fläche der Unterseite des Kolbenrings 9, so dass sich zwischen der wirksamen Kontaktfläche und der Gesamtfläche der Unterseite des Kolbenrings 9 ein Verhältnis von 1:2 ergibt. Hiermit konnten bei Versuchen besonders gute Ergebnisse erreicht werden.

Infolge der Bewegung der Kolbenringe 9 kommt deren wirksame Kontaktfläche nach und nach mit der gesamten zugewandten Tragfläche 11 der unteren Seitenflanke der zugeordneten Kolbenringnut 8 in Berührung, wodurch sich der im Bereich der tatsächlichen Berührung zwischen der Unterseite des Kolbenrings 9 und der Tragfläche 11 entstehende Verschleiß auf die gesamte Tragfläche 11 verteilt. Über die Gesamtheit dieser Fläche gesehen ergibt sich daher eine vergleichsweise geringe Verschleißrate.

Zweckmäßig ist die untere Seitenflanke der Kolbenringnut 8 mit einer aus verschleißfestem Material bestehenden Schutzschicht 12 versehen, die die durchgehende Tragfläche 11 enthält. Zur Bildung der Schutzschicht 12 können kostengünstige Materialien, wie Chrom bzw. Chromlegierungen, Verwendung finden. Infolge der Reduzierung der Verschleißrate über der ganzen Tragfläche können auch mit derart kostengünstigen Materialien vergleichsweise lange Standzeiten erreicht werden.

Die die wirksame Kontaktfläche der Kolbenringunterseite begrenzenden Ausnehmungen 10 gehen, wie den Figuren 2 bis 4 entnehmbar ist, vom radial inneren Rand des zugeordneten Kolbenrings 9 aus und kommunizieren dementsprechend, wie am besten aus Figur 2 ersichtlich ist, mit einem von der radial inneren Begrenzung der Kolbenringnut 8 und der dieser mit Abstand gegenüberliegenden, radial inneren Begrenzung des Kolbenrings 9 begrenzten Ringraum 13. Die Höhe des Kolbenrings 9 ist etwas kleiner als die lichte Höhe der zugeordneten Kolbenringnut 8. Auf diese Weise ergibt sich oberhalb des Kolbenrings 9 ein Spalt 14, über den der Ringraum 13 mit dem Spalt 15 zwischen der Kolbenkrone 7 und der Laufbüchse 2 und hierüber mit dem Brennraum 1 kommuniziert.

Der Kolbenring 9 wird daher, wie in Figur 4 durch Strömungspfeile 16 angedeutet ist, von Abgas umströmt, das in die Ausnehmungen 10 vordringen kann. Hierdurch wird eine auf den Kolbenring 9 wirkende, nach oben gerichtete Kraft erzeugt, wodurch die auf die wirksame Kontaktfläche wirkende Pressung reduziert wird, das heißt dass die Kontaktfläche entlastet wird, was sich neben der oben bereits erwähnten Verteilung des Verschleißes auf die gesamte Tragfläche 11 günstig auf die Verlängerung der Standzeit der Tragfläche 11 auswirkt.

Bei dem den Figuren 2 bis 4 zugrundeliegenden Beispiel sind die Ausnehmungen 10, wie Figur 3 anschaulich zeigt, als vom radial inneren Rand des Kolbenrings 9 ausgehende Nuten ausgebildet, die mit Abstand vom radial äußeren Rand des Kolbenrings 9 enden. Hierdurch ergibt sich ein ebener, dem radial äußeren Rand des Kolbenrings 9 benachbarter Anlagebereich 17, der eine gasdichte Anlage der Unterseite des Kolbenrings 9 an der Tragfläche 11 der unteren Seitenflanke der zugeordneten Kolbenringnut 8 ermöglicht. Dieser Anlagebereich 17 ist zweckmäßig so breit, dass sich seine minimale Breite zur Gesamtbreite des Kolbenrings 9 verhält wie 1:3 bis 1:5, vorzugsweise wie 1:4.

Zweckmäßig ist der Anlagebereich 17, wie die Figuren 3 und 4 zeigen, über dem Umfang des Kolbenrings 9 mit wenigstens einer einen Leckagekanal 18 bildenden Unterbrechung versehen, die mit einer vom radial inneren Rand des Kolbenrings 9 ausgehenden Ausnehmung 10 kommuniziert, so dass Abgas vom Bereich oberhalb des Kolbenrings 9 in den Bereich unterhalb des Kolbenrings 9 gelangen kann, wie in Figur 4 durch den Strömungspfeil 16a angedeutet ist. Der lichte Querschnitt des Strömungskanals 18 ist, wie aus Figuren 3 und 4 erkennbar ist, kleiner als der lichte Querschnitt der hiermit kommunizierenden nutförmigen Ausnehmung 10. Hierzu ist die Tiefe der den Strömungskanal 18 bildenden Unterbrechung ist geringer als die Tiefe der oberflächenseitigen Ausnehmungen 10. Es genügt, wenn die Tiefe des Strömungskanals 18 ein Viertel (1/4) der Tiefe der Ausnehmungen 10 beträgt, die ihrerseits zweckmäßig ein Fünfzigstel (1/50) bis ein Zwanzigstel (1/20) und vorzugsweise ein Dreißigstel (1/30) der Breite des Kolbenrings 9 beträgt.

Bei dem den Figuren 2 bis 4 zugrundeliegenden Beispiel sind die Ausnehmungen 10, wie schon erwähnt, als vom radial inneren Rand des Kolbenrings 9 ausgehende Nuten ausgebildet. Diese sind zweckmäßig so ausgebildet, dass sich eine an ein Quadrat in etwa angenäherte Flächenkonfiguration ergibt. Vorteilhaft ist die Lage der Ausnehmungen so gewählt, dass zumindest eine ihrer seitlichen Flanken mit der radialen Richtung einen Winkel α einschließt. Die andere Flanke kann mit der radialen Richtung denselben Winkel α oder einen anderen Winkel β einschließen oder in radialer Richtung verlaufen. Die Flanken des Strömungskanals 18 verlaufen zweckmäßig parallel und zur radialen Richtung geneigt, vorzugsweise um denselben Winkel wie die stärker gegenüber der radialen Richtung geneigte Seitenflanke der Ausnehmung 10.

Durch den gegenüber der radialen Richtung geneigten Verlauf wenigstens einer Flake der Ausnehmungen 10 und gegebenenfalls des Strömungskanals 18 wird die Rotationsbewegung des Kolbenrings 9 unterstützt, was sich günstig auf die Verteilung des auftretenden Verschleißes auf die gesamte Tragfläche 11 auswirkt.

Die oben erwähnte Neigung wenigstens einer Flanke oder beider Flanken der Ausnehmungen 10 liegt zweckmäßig zwischen 0 und 60°. Bei dem in Figur 3 dargestellten Beispiel sind die beiden Flanken um unterschiedliche Winkel α und β gegenüber der radialen Richtung geneigt, wobei der Winkel α bevorzugt 50° und der Winkel β bevorzugt 25° beträgt. Hiermit wird ein gutes Rotationsverhalten des Kolbenrings 9 erreicht. Die Neigung des Strömungskanals 18 ist parallel zu der um den größeren Winkel α geneigten Flanke.

Die die Ausnehmungen 10 bildenden Nuten sind, wie Figur 3 weiter zeigt, durch Stege 19 voneinander getrennt, die hier mit dem Anlagebereich 17 zusammenhängen. Die Breite der Stege 19 ist zweckmäßig kleiner als die quer hierzu verlaufende Rotationsbewegung des Kolbenrings 9, was sich ebenfalls günstig auf eine gleichmäßige Verteilung des Verschleißes auf die gesamte Tragfläche 11 auswirkt.

Aufgrund des Unterschieds der Winkel α und β sind die Stege 19 radial innen breiter als am dem Anlagebereich zugewandten Ende. Hierdurch erhält der Kolbenring 9, wie aus Figur 3 anschaulich ersichtlich ist, im seinem radial inneren Rand benachbarten Bereich eine größerflächige Anlage an der Tragfläche 11 der Kolbenringnut 8, als dies bei einem parallelen Verlauf der Seitenflanken der Ausnehungen 10 der Fall wäre. Hierdurch wird eine gute Ballance zwischen radial innerer Anlage und radial äußerer Anlage des Kolbenrings 9 und damit eine zuverlässige Dichtwirkung erreicht.

Bei dem den Figuren 5 und 6 zugrundeliegenden Beispiel ist eine andere Gestaltung der die wirksame Kontaktfläche des Kolbenrings 9 reduzierenden Ausnehmungen vorgesehen. Die verschleißreduzierende Wirkung ist jedoch dieselbe wie beim vorstehend beschriebenen Beispiel. Für gleiche Teile finden daher auch weitgehend gleiche Bezugszeichen Verwendung. Bei der Ausführung gemäß Figuren 5, 6 ist der Kolbenring 9 an seiner Unterseite zur Bildung von die Kontaktfläche reduzierenden Ausnehmungen mit konzentrisch zu seinem radial inneren bzw. radial äußeren Rand umlaufenden Nuten 20 versehen, die mit wenigstens einer vom radial inneren Rand des Kolbenrings 9 ausgehenden radialen Stichnut 21 kommunizieren. Über dem Umfang können auch mehrere Stichnuten 21 vorgesehen sein. Zwischen den in radialer Richtung gestaffelten Nuten 20 befinden sich hierzu konzentrische Stege 22. Die radiale Breite der Stege 22 ist zweckmäßig kleiner als die radiale Bewegung des Kolbenrings 9.

Ausgehend vom radial äußeren Rand des Kolbenrings 9 ist ein vergleichsweise breiter, eine gasdichte Anlage ermöglichender Anlagebereich 17 vorgesehen. Dieser ist durch wenigstens einen von einer Stichnut 21 abgehenden Strömungskanal 18 unterbrochen. Bezüglich der Tiefenverhältnisse sowie der Flächenverhältnisse gelten auch bei dem den Figuren 5 und 6 zugrundeliegenden Beispiel die oben im Zusammenhang mit den Figuren 2 bis 4 gemachten Angaben.

Die obigen Ausführungen lassen erkennen, dass die Erfindung nicht auf die in der Zeichnung dargestellten Konfigurationen der die wirksame Kontaktfläche reduzierenden Ausnehmungen beschränkt ist. Vielmehr ist praktisch jede Form möglich.

## Patentansprüche

1. Hubkolbenmaschine, insbesondere Hubkolbenbrennkraftmaschine, vorzugsweise in Form eines Zweitakt-Großdieselmotors, mit wenigstens einem in einem Zylinder aufgenommenen Kolben (6), der mit wenigstens einem in einer zugeordneten Kolbenringnut (8) angeordneten Kolbenring (9) versehen ist, der mit einer auf Pressung belasteten Kontaktfläche an seiner Unterseite auf der unteren Seitenflanke der zugeordneten Kolbenringnut (8) aufliegt, **dadurch gekennzeichnet, dass** die auf Pressung belastete, die untere Seitenflanke der Kolbenringnut (8) berührende Kontaktfläche der Unterseite des Kolbenrings (9) kleiner als die durch den radial inneren Rand des Kolbenrings (9) und den radial äußeren Rand der Kolbenringnut (8) begrenzte Überdeckungsfläche ist, wobei die Unterseite des Kolbenrings (9) mit ihre wirksame Kontaktfläche begrenzenden, oberflächenseitigen Ausnehmungen (1:0; 20, 21) versehen ist, zwischen denen Stege (19, 22) vorgesehen sind.

2. Hubkolbenmaschine nach Anspruch 1, **dadurch gekennzeichnet, dass** das Verhältnis der wirksamen Kontaktfläche der Unterseite des Kolbenrings (9) zur Gesamtfläche der Unterseite des Kolbenrings (9) im Bereich von 1:1,5 bis 1:3 liegt.

3. Hubkolbenmaschine nach Anspruch 2, **dadurch gekennzeichnet, dass** das Verhältnis der wirksamen Kontaktfläche der Unterseite des Kolbenrings (9) zur Gesamtfläche der Unterseite des Kolbenrings (9) 1:2 beträgt.

4. Hubkolbenmaschine nach einem der vorhergehenden Ansprüche, **dadurch gekennzeichnet, dass** die Ausnehmungen (10; 20, 21) vom radial inneren Rand des Kolbenrings (9) ausgehen.

5. Hubkolbenmaschine nach einem der vorhergehenden Ansprüche, **dadurch gekennzeichnet, dass** die untere Seitenflanke der Kolbenringnut (8) eine ununterbrochene Tragfläche (11) aufweist.

6. Hubkolbenmaschine nach einem der vorhergehenden Ansprüche, **dadurch gekennzeichnet, dass** die untere Seitenflanke der Kolbenringnut (8) mit einer aus verschleißfestem Material bestehenden Beschichtung (12) versehen ist.

7. Hubkolbenmaschine nach Anspruch 6, **dadurch gekennzeichnet, dass** die Beschichtung (12) aus Chrom oder einer Chromlegierung besteht.

8. Hubkolbenmaschine nach einem der vorhergehenden Ansprüche, **dadurch gekennzeichnet, dass** die die wirksame Kontaktfläche der Unterseite des Kolbenrings (9) reduzierenden Ausnehmungen (10; 20, 21) an einem dem radial äußeren Randbereich der Unterseite des Kolbenrings (9) zugeordneten Anlagebereich (17) enden.

9. Hubkolbenmaschine nach Anspruch 8, **dadurch gekennzeichnet, dass** der Anlagebereich (17) mit wenigstens einer einen Leckagekanal (18) bildenden Unterbrechung versehen ist, die mit einer vom radial inneren Rand des Kolbenrings (9) ausgehenden Ausnehmung (10; 20, 21) kommuniziert.

10. Hubkolbenmaschine nach Anspruch 9, **dadurch gekennzeichnet, dass** die lichte Tiefe des Leckagekanals (18) kleiner als die lichte Tiefe der die wirksame Kontaktfläche der Unterseite des Kolbenrings (9) reduzierenden Ausnehmungen (10; 20,21) ist.

11. Hubkolbenmaschine nach einem der vorhergehenden Ansprüche 8 bis 10, **dadurch gekennzeichnet, dass** das Verhältnis der geringsten Breite des Anlagebereichs (17) zur Gesamtbreite des Kolbenrings (9) 1:4 ist.

12. Hubkolbenmaschine nach einem der vorhergehenden Ansprüche, **dadurch gekennzeichnet, dass** das Verhältnis der Tiefe der die wirksame Kontaktfläche der Unterseite des Kolbenrings (9) reduzierenden Ausnehmungen (10; 20,21) zur Breite des Kolbenrings (9) im Bereich von 1:50 bis 1:20 liegt, vorzugsweise 1:30 ist.

13. Hubkolbenmaschine nach einem der vorhergehenden Ansprüche, **dadurch gekennzeichnet, dass** die die wirksame Kontaktfläche der Unterseite des Kolbenrings (9) reduzierenden Ausnehmungen durch Stege (19; 22) voneinander getrennt sind, deren Breite kleiner als die quer hierzu gerichtete Bewegung des Kolbenrings (9) ist.

14. Hubkolbenmaschine nach einem der vorhergehenden Ansprüche, **dadurch gekennzeichnet, dass** die die wirksame Kontaktfläche der Unterseite des Kolbenrings (9) reduzierenden Ausnehmungen (10) als vom radial inneren Rand des Kolbenrings (9) ausgehende Nuten ausgebildet sind.

15. Hubkolbenmaschine nach Anspruch 14, **dadurch gekennzeichnet, dass** wenigstens eine Flanke der die Ausnehmungen (10) bildenden Nuten gegenüber der radialen Richtung um einen Winkel α geneigt sind.

16. Hubkolbenmaschine nach Anspruch 15, **dadurch gekennzeichnet, dass** beide Flanken der die Ausnehmung (10) bildenden Nuten gegenüber der radialen Richtung geneigt sind.

17. Hubkolbenmaschine nach Anspruch 16, **dadurch gekennzeichnet, dass** die Flanken der die Ausnehmung (10) bildenden Nuten gegenüber der radialen Richtung um unterschiedliche Winkel geneigt sind.

18. Hubkolbenmaschine nach Anspruch 15 - 17, **dadurch gekennzeichnet, dass** die Neigung der Flanken höchstens 60° beträgt.

19. Hubkolbenmaschine nach Anspruch 17 und 18, **dadurch gekennzeichnet, dass** die Neigung einer Flanke 25° und die Neigung der anderen Flanke 50° beträgt.

20. Hubkolbenmaschine nach einem der vorhergehenden Ansprüche 1 bis 13, **dadurch gekennzeichnet, dass** die die wirksame Kontaktfläche der Unterseite des Kolbenrings (9) reduzierenden Ausnehmungen zu den Rändern des Kolbenrings (9) konzentrische Nuten (20) aufweisen, die mit wenigstens einer vom radial inneren Rand des Kolbenrings (9) ausgehenden, radialen Stichnut (21) kommunizieren.

## Claims

1. A reciprocating piston engine, in particular a reciprocating piston internal combustion engine, preferably in the form of a large-size two-stroke cycle diesel engine, comprising at least one piston (6) accommodated in a cylinder, such piston being provided with at least one piston ring (9) accommodated in an associated piston ring groove (8), such piston ring (9) with a pressure-loaded contact surface on its bottom side resting on the lower side flank of the associated piston ring groove (8), **characterised in that** the pressure-loaded contact surface of the bottom side of the piston ring (9) contacting the lower side flank of the piston ring groove (8) is smaller than the engagement surface limited by the radially inner rim of the piston ring (9) and the radially outer rim of the piston ring groove (8), with the bottom side of the piston ring (9) being provided with surface-side recesses (10; 20, 21) reducing the effective contact surface thereof and between which webs (19, 22) are provided.

2. A reciprocating piston engine according to Claim 1, **characterised in that** the ratio of the effective contact surface of the bottom side of the piston ring (9) to the entire bottom side of the piston ring (9) is in the region of between 1:1.5 and 1:3.

3. A reciprocating piston engine according to claim 2, **characterised in that** the ratio of the effective contact surface of the bottom side of the piston ring (9) to the entire bottom side of the piston ring (9) is 1:2.

4. A reciprocating piston engine according to any of the preceding claims, **characterised in that** the recesses (10; 20, 21) extend from the radially inner rim of the piston ring (9).

5. A reciprocating piston engine according to any of the preceding claims, **characterised in that** the lower side flank of the piston ring groove (8) has a continuous bearing surface (11).

6. A reciprocating piston engine according to any of the preceding claims, **characterised in that** the lower side flank of the piston ring groove (8) is provided with a coating (12) made of a wear-resistant material.

7. A reciprocating piston engine according to claim 6, **characterised in that** the coating (12) consists of chromium or a chromium alloy.

8. A reciprocating piston engine according to any of the preceding claims, **characterised in that** the recesses (10; 20, 21) reducing the effective contact surface of the bottom side of the piston ring (9) terminate at a contact area (17) associated with the radially external rim area of the bottom side of the piston ring (9).

9. A reciprocating piston engine according to claim 8, **characterised in that** the contact area (17) is provided with at least one interruption forming a leakage channel (18), which communicates with a recess (10; 20, 21) extending from the radially inner rim of the piston ring (9).

10. A reciprocating piston engine according to claim 9, **characterised in that** the clear depth of the leakage channel (18) is smaller than the clear depth of the recesses (10; 20, 21) reducing the effective contact surface of the bottom side of the piston ring (9).

11. A reciprocating piston engine according to any of the preceding claims 8 to 10, **characterised in that** the ratio of the smallest width of the contact surface (17) to the total width of the piston ring (9) is 1:4.

12. A reciprocating piston engine according to any of the preceding claims, **characterised in that** the ratio of the depth of the recesses (10; 20, 21) reducing the effective contact surface of the bottom side of the piston ring (9) to the width of the piston ring (9) is in the region of between 1:50 and 1:20, preferably 1:30.

13. A reciprocating piston engine according to any of the preceding claims, **characterised in that** the recesses (10; 20, 21) reducing the effective contact surface of the bottom side of the piston ring (9) are separated from one another by webs (19; 22) whose width is smaller than the movement of the piston ring (9) in a direction transverse thereto.

14. A reciprocating piston engine according to any of the preceding claims, **characterised in that** the recesses (10) reducing the effective contact surface of the bottom side of the piston ring (9) are designed as grooves extending from the radially inner rim of the piston ring (9).

15. A reciprocating piston engine according to claim 14, **characterised in that** at least one flank of the grooves forming the recesses (10) is inclined at an angle α relative to the radial direction.

16. A reciprocating piston engine according to claim 15, **characterised in that** both flanks of the grooves forming the recess (10) are inclined relative to the radial direction.

17. A reciprocating piston engine according to claim 16, **characterised in that** the flanks of the grooves forming the recess (10) are inclined at different angles relative to the radial direction.

18. A reciprocating piston engine according to any of the preceding claims 15 to 17, **characterised in that** the maximum angle of inclination of the flanks is 60 degrees.

19. A reciprocating piston engine according to any of the preceding claims 17 and 18, **characterised in that** the angle of inclination of one flank is 25 degrees and the angle of inclination of the other flank is 50 degrees.

20. A reciprocating piston engine according to any of the preceding claims 1 to 13, **characterised in that** the recesses reducing the effective contact surface of the bottom side of the piston ring (9) are provided with grooves (20) arranged concentrically to the rims of the piston rings (9), such grooves communicating with at least one radial cross-groove (21) extending from the radially inner rim of the piston ring (9).

## Revendications

1. Machine à piston alternatif, en particulier moteur à combustion interne à piston alternatif, de préférence sous forme d'un grand moteur Diesel à deux temps, avec au moins un piston (6) qui est reçu dans un cylindre et qui est pourvu d'au moins un segment de piston (9) lequel est disposé dans une gorge annulaire associée (8) du piston et lequel s'appuie - avec une surface de contact de sa face inférieure, qui est soumise à pression - contre le flanc latéral inférieur de la gorge annulaire associée (8) du piston, **caractérisée par le fait que** ladite surface de contact de la face inférieure du segment de piston (9), qui est soumise à pression et qui touche le flanc latéral inférieur de la gorge annulaire (8) du piston est plus petite que la surface de recouvrement limitée par le bord radialement intérieur du segment de piston (9) et par le bord radialement extérieur de la gorge annulaire (8) du piston, la face inférieure du segment de piston (9) étant pourvue d'évidements de surface (10 ; 20, 21) lesquels limitent la surface effective de contact de celle-ci et entre lesquels sont prévues des entretoises (19, 22).

2. Machine à piston alternatif selon la revendication 1, **caractérisée par le fait que** le rapport de la surface effective de contact de la face inférieure du segment de piston (9) à la surface totale de la face inférieure du segment de piston (9) est compris entre 1 : 1,5 et 1 : 3.

3. Machine à piston alternatif selon la revendication 2, **caractérisée par le fait que** le rapport de la surface effective de contact de la face inférieure du segment de piston (9) à la surface totale de la face inférieure du segment de piston (9) est de 1 : 2.

4. Machine à piston alternatif selon l'une des revendications précédentes, **caractérisée par le fait que** lesdits évidements (10 ; 20, 21) partent du bord radialement intérieur du segment de piston (9).

5. Machine à piston alternatif selon l'une des revendications précédentes, **caractérisée par le fait que** le flanc latéral inférieur de la gorge annulaire (8) du piston présente une surface de support (11) continue.

6. Machine à piston alternatif selon l'une des revendications précédentes, **caractérisée par le fait que** le flanc latéral inférieur de la gorge annulaire (8) du piston est pourvu d'un revêtement (12) réalisé en un matériau résistant à l'usure.

7. Machine à piston alternatif selon la revendication 6, **caractérisée par le fait que** ledit revêtement (12) est réalisé en chrome ou en un alliage de chrome.

8. Machine à piston alternatif selon l'une des revendications précédentes, **caractérisée par le fait que** les évidements (10 ; 20, 21) réduisant la surface effective de contact de la face inférieure du segment de piston (9) se terminent sur une zone d'appui (17) associée à la zone marginale radialement extérieure de la face inférieure du segment de piston (9).

9. Machine à piston alternatif selon la revendication 8, **caractérisée par le fait que** ladite zone d'appui (17) est pourvue d'au moins une lacune qui forme un canal de fuite (18) et qui communique avec un évidement (10 ; 20, 21) partant du bord radialement intérieur du segment de piston (9).

10. Machine à piston alternatif selon la revendication 9, **caractérisée par le fait que** la profondeur intérieure dudit canal de fuite (18) est inférieure à la profondeur intérieure des évidements (10 ; 20, 21) réduisant la surface effective de contact de la face inférieure du segment de piston (9).

11. Machine à piston alternatif selon l'une des revendications précédentes 8 à 10, **caractérisée par le fait que** le rapport de la largeur la plus faible de la zone d'appui (17) à la largeur totale du segment de piston (9) est de 1 : 4.

12. Machine à piston alternatif selon l'une des revendications précédentes, **caractérisée par le fait que** le rapport de la profondeur des évidements (10 ; 20, 21) réduisant la surface effective de contact de la face inférieure du segment de piston (9) à la largeur du segment de piston (9) est compris entre 1 : 50 et 1 : 20, de préférence il est de 1 : 30.

13. Machine à piston alternatif selon l'une des revendications précédentes, **caractérisée par le fait que** les évidements réduisant la surface effective de contact de la face inférieure du segment de piston (9) sont séparés les uns des autres par des entretoises (19 ; 22) dont la largeur est plus faible que le mouvement du segment de piston (9), dirigé transversalement à cela.

14. Machine à piston alternatif selon l'une des revendications précédentes, **caractérisée par le fait que** les évidements (10) réduisant la surface effective de contact de la face inférieure du segment de piston (9) sont réalisés en tant que rainures partant du bord radialement intérieur du segment de piston (9).

15. Machine à piston alternatif selon la revendication 14, **caractérisée par le fait qu'**au moins un flanc des rainures formant les évidements (10) est incliné d'un angle α par rapport à la direction radiale.

16. Machine à piston alternatif selon la revendication 15, **caractérisée par le fait que** les deux flancs des rainures formant ledit évidement (10) sont inclinés par rapport à la direction radiale.

17. Machine à piston alternatif selon la revendication 16, **caractérisée par le fait que** les flancs des rainures formant ledit évidement (10) sont inclinés à des angles différents par rapport à la direction radiale.

18. Machine à piston alternatif selon les revendications 15 à 17, **caractérisée par le fait que** l'inclinaison des flancs est de 60° tout au plus.

19. Machine à piston alternatif selon les revendications 17 et 18, **caractérisée par le fait que** l'un des flancs est incliné de 25° et l'autre flanc est incliné de 50°.

20. Machine à piston alternatif selon l'une des revendications précédentes 1 à 13, **caractérisée par le fait que** les évidements réduisant la surface effective de contact de la face inférieure du segment de piston (9) présentent des rainures (20) qui sont concentriques aux bords du segment de piston (9) et qui communiquent avec au moins une rainure radiale de type impasse (21) partant du bord radialement intérieur du segment de piston (9).
